# EUROPEAN PATENT SPECIFICATION

(11) **EP 4 497 631 B1**
(45) Date of publication and mention of the grant of the patent: **28.01.2026**
(21) Application number: 24183023.1
(22) Date of filing: 19.06.2024
(51) Int. Cl.: B60P 1/64, F16H 25/24, B25J 9/12, B66C 23/78, B66F 7/14, B66F 7/20, F16H 25/20, B65D 90/14

(54) **LEVELLING SYSTEM COMPRISING A SCREW ACTUATOR**
NIVELLIERUNGSSYSTEM MIT SCHRAUBENAKTUATOR
SYSTÈME DE MISE À NIVEAU COMPRENANT UN ACTIONNEUR À VIS

(30) Priority: 25.07.2023 IT 202300015606
(43) Date of publication of application: 29.01.2025
(73) Proprietor: Esse-Bi Engineering S.r.l., 25028 Verolanuova (BS) (IT)
(72) Inventor: BARBIERI, Stefano, I-25028 Verolanuova, BRESCIA (IT)
(74) Representative: Gamba, Alessandro

(56) References cited:
- EP-B1- 2 495 509
- EP-B1- 3 476 693
- DE-A1- 102005 001 780
- DE-A1- 3 937 624

## Description

The present invention relates to a levelling system that comprises a screw actuator.

The present invention finds application in the context of levelling an operating unit, which requires, in order to fulfill its functions, an initial stabilization of its position with respect to a ground plane, such as a ground or road or pavement.

The term "operating unit" refers, for example, to a loading platform of a motor vehicle.

The term "operating unit" refers, for example, to a loading platform transportable on a motor vehicle.

The term "operating unit" refers, for example, to a motor vehicle, such as a truck.

The term "operating unit" refers, for example, to a railway wagon.

The term "operating unit" refers, for example, to a crane for lifting loads transported on an industrial crane truck, for example usable in civil and road sectors.

Examples of embodiments of levelling systems associated with motor vehicles are described in Italian patent applications ITRM20020621A1 and ITRM20040114A1.

The term "operating unit" refers, for example, to a motorized, autonomous or remote-controlled industrial platform, for example of the type used in industrial environments for the movement of goods.

"Operating unit" means, for example, a lifting platform, for loads and/or people, having a vertically extensible lever, typically a pantograph lever.

The term "operating unit" refers, for example, to a cab of a type transportable by rail or road, for example of a type used for freight transport, such as an ISO container.

"Operating unit" means, for example, a cab transportable on the loading surface of a motor vehicle, such as a truck having a rear loading platform and a forward driver cab at the front.

For example, "operating unit" means a prefabricated cab, typically made of metal carpentry walls, transportable and installable in a predefined location.

Cabs of this type, also known as shelter cabs, are known to be used in the telecommunications sector, to accommodate the apparatuses for the transmission and reception of television, radio and telephone signals or as an optical fiber distribution node. Again, by way of example, prefabricated cabs are known to be used in the railway, port and airport sectors to house vehicle traffic control equipment and for the distribution of the related power grid.

The present invention also finds application in the military field, in particular for the stabilization of missile launch platforms, for example carried on military motor vehicles.

"Operating unit" refers, for example, to a missile launching platform.

For military applications, the stabilization and levelling of the weapon are aspects of fundamental importance that inevitably affect the ballistics of the projectile. Positioning errors, malfunctions or failures of the levelling system of the weapon may lead to the ineffectiveness or unavailability of said weapon, with consequent critical disadvantages on the field.

In general, levelling systems comprise a plurality of levelling arms operatively connected to the operating unit for the purpose of levelling its position.

Each levelling arm comprises a free end intended to be associated with the ground plane. Typically, a stabilizing plate intended to be placed in contact with the ground plane is operatively connected to the free end.

The positioning operations of the levelling arms may be carried out in an automated manner, by means of sensors, or manually by an operator. These operations involve the lengthening or shortening and simultaneous lifting or lowering of each levelling arm, typically independently of each other.

Each levelling arm is telescopic and comprises a screw actuator configured to result in a change in the position of the operating unit with respect to the ground plane.

Once the levelling arms have been positioned, by virtue of the operation of the respective screw actuators, the operating unit may be positioned at a predefined height and in a predefined position, for example substantially horizontal or inclined, with respect to the ground plane.

Examples of levelling systems having such an operation are described in documents DE3937624A1, DE102005001780A1, EP3476693B1 and EP2495509B1.

In the field of levelling systems, especially for the military, there is a strong need to provide high precision levelling systems, and levelling arms with remarkable reliability, even in the presence of considerable loads, especially in the presence of an uneven ground plane, i.e., locally characterized by looseness and/or inclinations and/or depressions and/or protrusions.

Specifically, the Applicant has identified, through practical applications, some critical aspects for the proper functioning of levelling systems. The main aspects include the recurring presence of an operating unit with an unevenly distributed mass, the safe management of high loads, and the typical presence of a non-homogeneous, inclined, or loose ground plane.

These aspects, especially when interrelated, contribute to the onset of shear stresses at the free end of the levelling arm, for example on the stabilizing plate, which induce a bending moment along the levelling arm. Tensions also affect the screw mechanism of the actuator, generating phenomena of high friction and wear, which result in malfunctions, blocking or breakage of the screw mechanism.

The object of the present invention is to propose a levelling system that at least partially overcomes the problems of the prior art mentioned above.

This object is achieved by claim 1 referring to a levelling system and by claim 13 referring to a motor vehicle comprising said levelling system. The claims dependent thereon seek protection for additional features that entail further technical advantages.

Further features and advantages of the invention will be apparent from the following description of preferred embodiment examples thereof, provided purely by way of non-limiting example, with reference to the accompanying figures, in which:

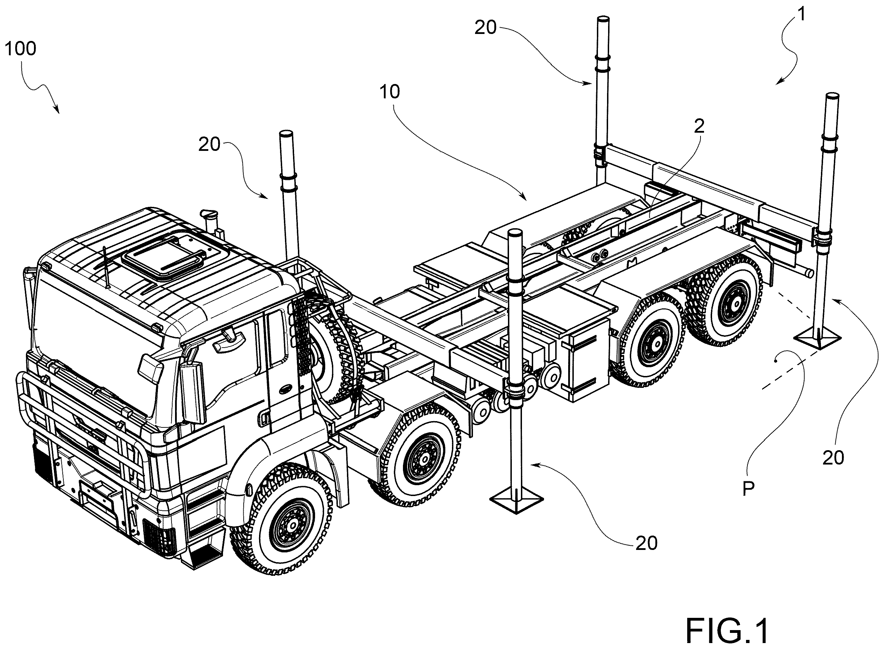

- Fig. 1 shows a motor vehicle comprising a levelling system in accordance with the present invention, according to an embodiment;

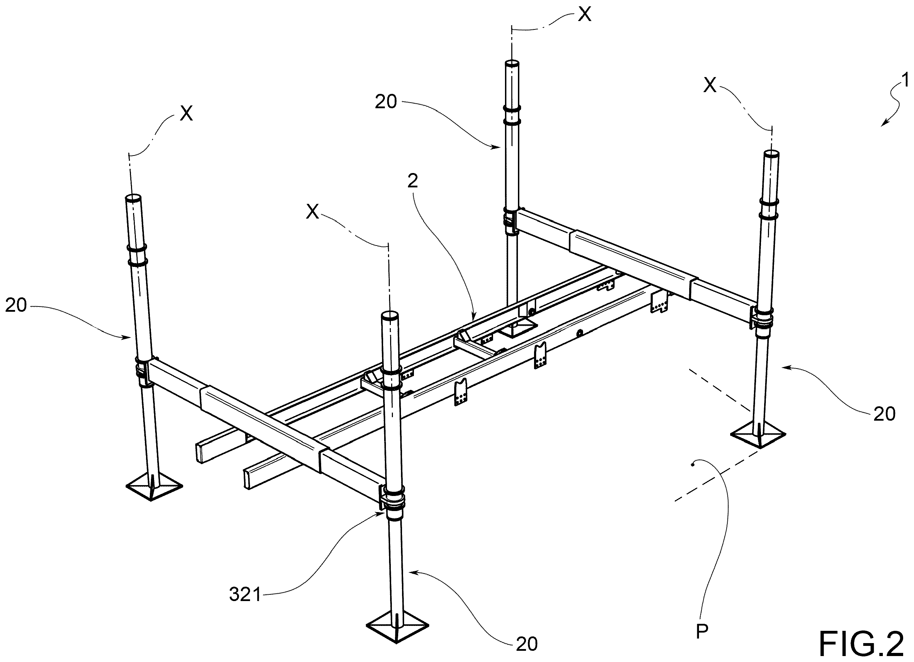

- Fig. 2 represents a levelling system in accordance with the present invention, according to an embodiment;

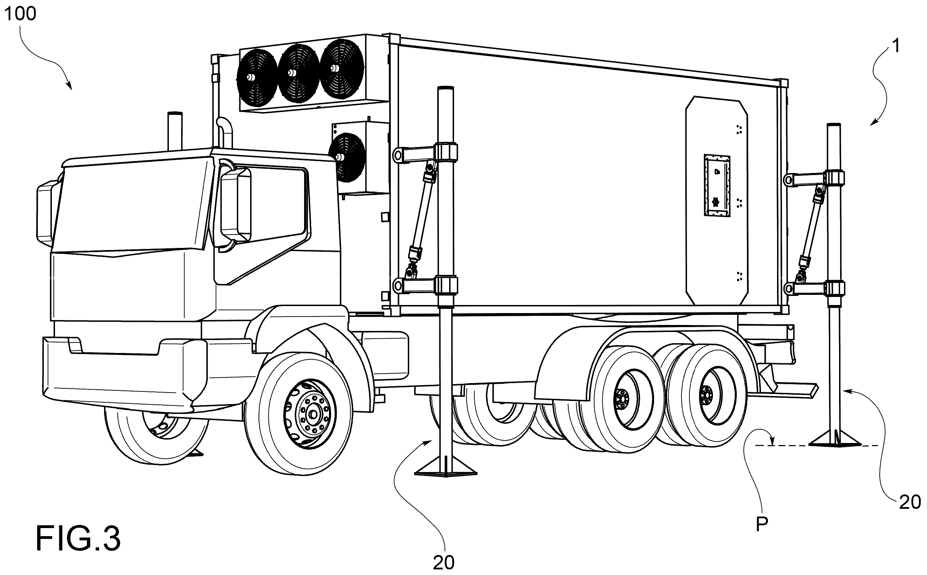

- Fig. 3 illustrates a motor vehicle comprising a prefabricated cab and a levelling system, in accordance with the present invention, according to an embodiment;

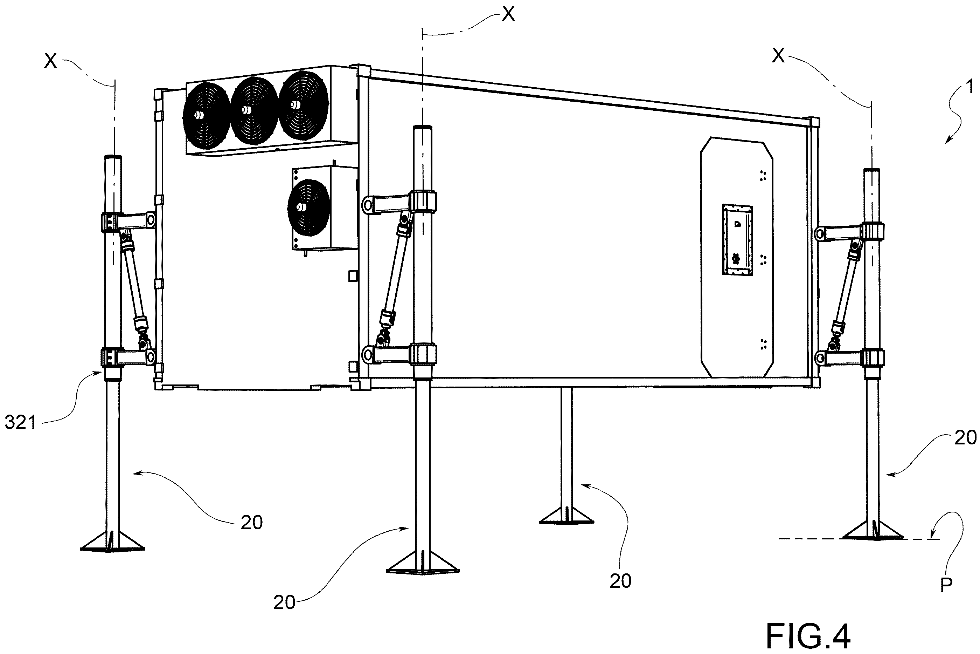

- Fig. 4 depicts a prefabricated cab and a levelling system mechanically connected to the cab;

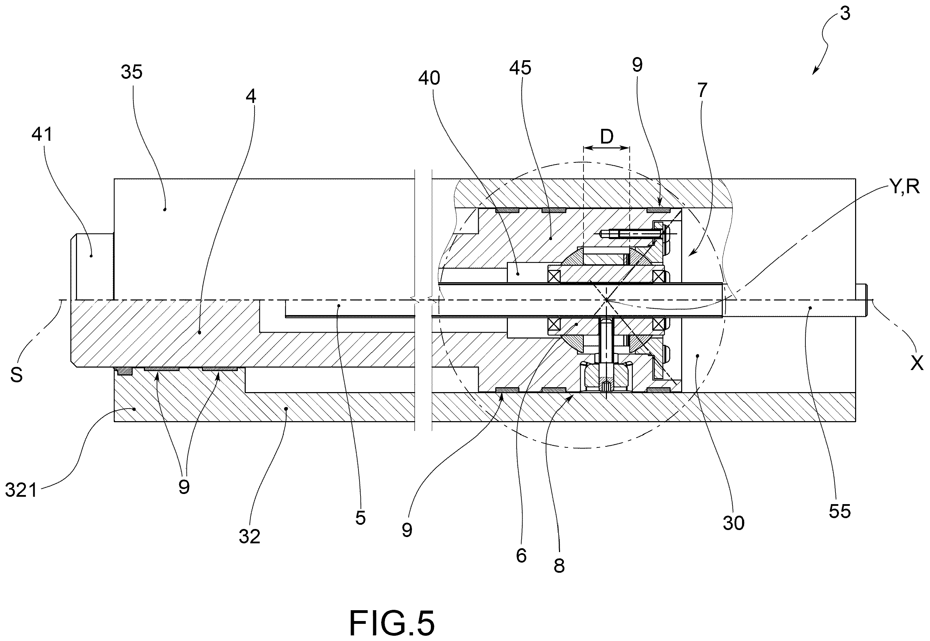

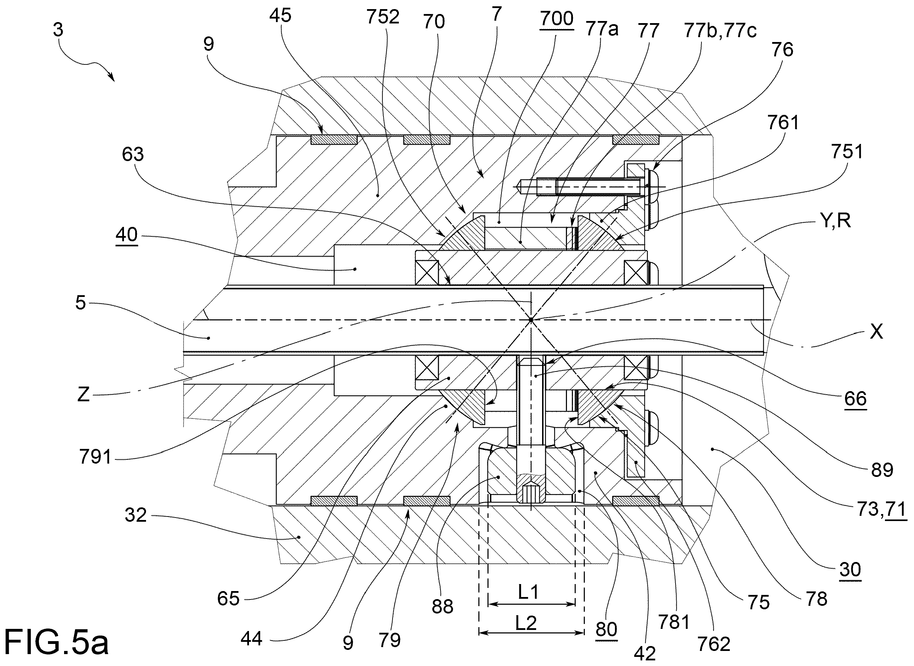

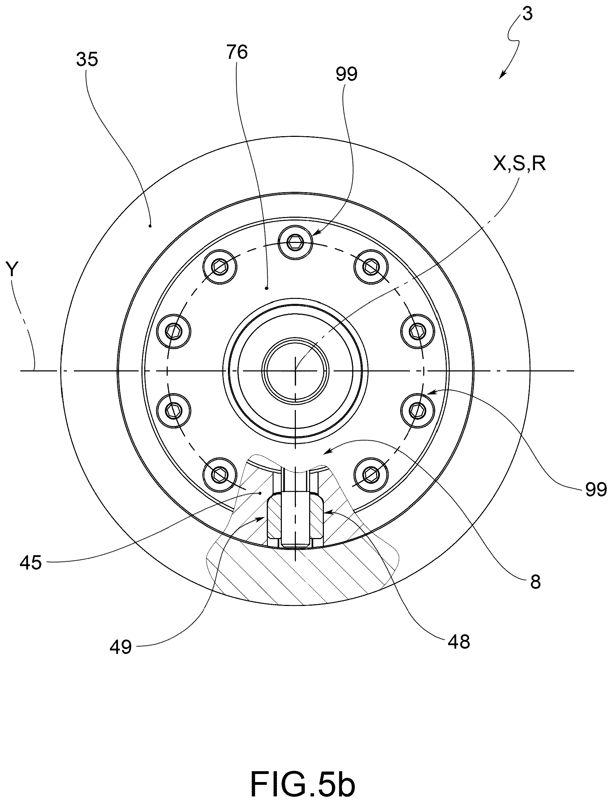

- Fig. 5 is a partial sectional view along a longitudinal plane of the screw actuator of the levelling system, in accordance with the present invention, according to an embodiment;
- Fig. 5a is an enlarged detail of the screw actuator in Fig. 5, in which the hinge assembly is shown;
- Fig. 5b is a partial sectional side view showing the connection member of the screw actuator, in accordance with the present invention, according to an embodiment.

With reference to the accompanying figures, a levelling system is denoted as a whole with the number 1. A motor vehicle comprising said levelling system 1 is denoted as a whole by the number 100.

The levelling system 1 is associable with an operating unit 10 and is configured to level the position of the operating unit 10 with respect to a ground plane P, for example a ground or a road or a pavement.

Preferably, the ground plane P is substantially horizontal, for example it is a flat ground.

Preferably, the ground plane P is inclined, for example it is an uphill or downhill road.

Throughout this discussion, "operating unit" means a system or a machine or a system or group of components or a motor vehicle which requires, in order to fulfill its functions, an initial stabilization of its position with respect to a ground plane.

Preferably, the operating unit 10 is restable on the ground plane P.

In one embodiment, the operating unit 10 is the loading platform of a motor vehicle or railway wagon.

In one embodiment, the operating unit 10 is a loading platform transportable on a motor vehicle or on a railway wagon.

In one embodiment, the operating unit 10 is a crane for lifting loads transported on an industrial motor vehicle (crane truck), for example usable in civil and road environments.

In one embodiment, the operating unit 10 is a motorized, autonomous or remote-controlled industrial platform, for example of the type used in industrial environments for the movement of goods.

In one embodiment, the operating unit 10 is a lifting platform for loads and/or people, preferably comprising a vertically extensible lever, such as a pantograph lever.

In one embodiment, the operating unit 10 is a movable elevatable platform, also known as a PLE, by virtue of which it is possible to perform work at height.

In one embodiment, the operating unit 10 is a cab of the type that is transportable by rail or road, for example of the type used for freight transport, such as an ISO container.

In one embodiment, the operating unit 10 is a cab which is transportable on the loading surface of a motor vehicle, such as for example a truck having a rear loading platform and a forward driver cab at the front.

In one embodiment, the operating unit 10 is a prefabricated cab, preferably transportable on a motor vehicle.

In one embodiment, the operating unit 10 is a shelter-type cab.

In one embodiment, the operating unit 10 is a missile launching platform.

In one embodiment, the operating unit 10 is a missile launching system of the motorized type or of the type installable on a motor vehicle.

According to the invention, the levelling system 1 comprises a frame 2, which is mechanically connectable to the operating unit 10, and at least one levelling arm 20 mechanically connected to the frame 2.

The frame 2 has the function of connecting the levelling system 1 to the operating unit 10.

Preferably, the frame 2 has a connection function between two or more levelling arms 20.

Preferably, the frame 2 is a load-bearing frame.

Preferably, the frame 2 comprises one or more uprights and/or one or more crosspieces, for example incident to each other, vertically and/or horizontally.

In one embodiment, the frame 2 is mechanically connectable to the loading platform of a motor vehicle.

In one embodiment, the frame 2 is the loading platform of a motor vehicle.

The positioning and operation of the levelling arm 20 involves a variation of the vertical position of the frame 2 with respect to the ground plane P, and therefore of the operating unit 10 connected thereto.

In one embodiment, the levelling system 1 comprises a plurality of levelling arms 20 operatively connected to the frame 2.

The number and positioning of the levelling arms 20 are selected according to the features of the operating unit 10.

In one embodiment, the frame 2 is mechanically connectable to perimeter edges of the operating unit 10.

Preferably, for example, the operating unit 10 has a substantially rectangular plan shape and the levelling system 1 comprises four levelling arms 20 respectively positioned at the four vertices of the operating unit 10.

According to the invention, the levelling arm 20 comprises a screw actuator 3.

According to the invention, the screw actuator 3 comprises an outer cylinder 35, which is mechanically connected to the frame 2.

The outer cylinder 35 and the frame 2 are integrally connected in motion.

In other words, the frame 2 is movable together with the outer cylinder 35.

In other words, the motion of the outer cylinder 35 corresponds to a motion of the frame 2, and therefore a motion of the operating unit 10.

For example, the translation of the outer cylinder 35 corresponds to a raising or lowering of the plan vertex of the operating unit 10 located at the levelling arm 20.

The outer cylinder 35 has a main axis X and comprises cylinder walls 32 that extend predominantly along and about the main axis X, internally delimiting a main chamber 30.

Preferably, the cylinder walls 32 have an annular shape about the main axis **X.**

According to the invention, the screw actuator 3 comprises a shaft 4, which is translatable with respect to the outer cylinder 35 along the main axis **X.**

The shaft 4 is at least partially housed in the main chamber 30 of the outer cylinder 35.

Preferably, the shaft 4 protrudes at least partially from the main chamber 30.

The shaft 4 is slidably engaged with the cylinder walls 32.

The shaft 4 extends mainly along a shaft axis S.

The shaft axis S is substantially parallel to the main axis **X.**

In ideal operating conditions of the screw actuator, the shaft axis S coincides with or is parallel to the main axis X.

The shaft 4 is configured to rest on the ground plane P.

The shaft 4 comprises a free shaft end 41 intended to rest on the ground plane P.

Preferably, the levelling arm 20 comprises a stabilizing plate engaged with the shaft 4, in particular to the free shaft end 41, and intended to rest directly on the ground plane P.

In one embodiment, the stabilizing plate is connected in a fixed position to the free shaft end 41; for example it is welded or connected by means of threaded screws.

In one embodiment, the stabilizing plate is hinged to the free shaft end 41 in a substantially horizontal plate axis.

In one embodiment, the levelling arm 20 comprises a ball joint that operatively connects the stabilizing plate to the free shaft end 41.

The shaft 4 comprises an inner shaft wall 45 that delimits a shaft chamber 40 in the main chamber 30.

According to the invention, the screw actuator 3 comprises a threaded maneuvering screw 5 having extension along the main axis X.

Preferably, the threaded maneuvering screw 5 is coaxial to the cylinder walls 32.

Preferably, the threaded maneuvering screw 5 extends along and about a screw axis coincident with the main axis **X.**

The threaded maneuvering screw 5 is at least partially housed in the shaft chamber 40 in a manner that is rotatable with respect to the main axis **X.**

Preferably, the threaded maneuvering screw 5 is supported in a translatable manner in the shaft chamber 40 along the main axis **X.**

Preferably, the screw actuator 3 comprises at least one bearing or bushing, for example housed in the main chamber 30, which rotatably supports the threaded maneuvering screw 5.

Preferably, the screw actuator 3 comprises at least one rolling bearing externally engaged with the cylinder walls 32 and internally engaged with a support portion of the threaded maneuvering screw 5.

In one embodiment, the screw actuator is of the rotating screw type.

In one embodiment, the screw actuator is of the rotating and translating screw type.

In one embodiment, the screw actuator is of the translating screw type.

The levelling system 1 also comprises motor means operatively connected to the threaded maneuvering screw 5, which are operable for rotating the threaded maneuvering screw 5.

Preferably, the threaded maneuvering screw 5 comprises a command portion 55 mechanically connected to the motor means.

In one embodiment, the levelling system 1 comprises a force transducer operatively connected to the threaded maneuvering screw 5, configured to detect the forces acting on the threaded maneuvering screw along the main axis X.

Preferably, the force transducer measures the weight force of the operating unit acting on the threaded maneuvering screw and/or cylinder walls 32, along the main axis X.

Preferably, the force transducer is of the type comprising a load cell.

Preferably, the threaded maneuvering screw is connected in motion to the cylinder walls 32.

According to the invention, the screw actuator 3 comprises a guide spiral 6 at least partially housed in the shaft chamber 40.

Preferably, the guide spiral is of the lead screw nut type.

Preferably, the guide spiral 6 is positioned in a fixed angular position with respect to the main axis X.

The guide spiral 6 comprises an annular guide wall 65 having a guide thread 63 screwed to the threaded maneuvering screw 5.

Preferably, the annular guide wall 65 has a substantially annular shape with respect to the main axis X.

Preferably, the annular guide wall 65 extends along and about a guide axis coincident to the main axis X.

Preferably, the threaded maneuvering screw 5 is externally threaded, and the guide thread 63 of the guide spiral 6 is an internal thread.

In a working configuration of the levelling system 1, in which the shaft 4 rests on the ground plane P, preferably at least partially discharging the weight force of the operating unit 10 onto said ground plane P, the rotation of the threaded maneuvering screw 5 corresponds to a translation along the main axis X of the threaded maneuvering screw 5 and of the outer cylinder 35 with respect to the shaft 4 and the guide spiral 6.

Since the operating unit 10 is integrally connected in motion to the outer cylinder 35, the rotation of the threaded maneuvering screw 5 corresponds to a raising or lowering of the operating unit 10 with respect to the ground plane P.

In other words, in the working configuration of the levelling system 1, the shaft 4 and the guide spiral 6 are in a fixed position along the main axis X.

According to the invention, the screw actuator 3 comprises a hinge assembly 7 configured to allow a relative oscillation between the shaft 4 and the guide spiral 6.

Preferably, the hinge assembly 7 is configured to swing the shaft 4 in the presence of an external force F acting on the shaft 4 along a direction orthogonal or incident to the shaft axis S.

In other words, the outer force F acts on the shaft 4 in a radial direction with respect to the main axis X.

The hinge assembly 7 is configured to allow a variation of the position of the shaft 4 within the main chamber 30.

In one embodiment, the hinge assembly 7 is configured to allow the position of the free shaft end 41 to vary in the circumferential direction with respect to the main axis X.

In one embodiment, the hinge assembly 7 is configured to allow a variation of the position of the free shaft end 41 in the circumferential direction with respect to the main axis X.

The hinge assembly 7 is connected in motion to the shaft 4 and to the guide spiral 6, along the main axis X.

In one embodiment, the guide spiral 6 is supported on the shaft 4 by the hinge assembly 7.

In one embodiment, the hinge assembly 7 is configured to swing the shaft 4 with respect to the guide spiral 6 about a secondary axis Y incident to the shaft axis S, preferably orthogonal to the shaft axis S.

Preferably, the secondary axis Y is orthogonal or incident to the annular guide wall 65.

Preferably, the secondary axis Y is oriented in a radial direction, for example orthogonal, with respect to the main axis X.

In one embodiment, the hinge assembly 7 is configured to swing the shaft 4 with respect to the guide spiral 6 about a center of rotation R located in the main chamber 30, preferably located in the shaft chamber 40.

Preferably, the center of rotation R is located along the main axis X.

Preferably, the center of rotation R is identified by the intersection of the main axis X with the secondary axis Y.

In one embodiment, the hinge assembly 7 comprises a joint 70 engaged with the guide spiral 6 and to the shaft.

Preferably, the joint 70 comprises a peripheral abutment surface 75 having an at least partially spherical shape, engaged with the inner shaft wall 45 of the shaft 4.

In one embodiment, the peripheral abutment surface 75 is spherical.

In one embodiment, the peripheral abutment surface 75 is spherical about a point located along the main axis X.

In one embodiment, the peripheral abutment surface 75 is spherical about the center of rotation R.

The joint 70 is configured to allow relative sliding between the inner shaft wall 45 and the peripheral abutment surface 75.

The joint 70 is configured to allow the inner shaft wall 45 to slide relative to the peripheral abutment surface 75.

In one embodiment, the joint 70 comprises a layer of low-friction material, for example comprising Teflon, that at least partially or entirely covers the peripheral abutment surface 75, for facilitating the sliding of the inner shaft wall 45 relative to the peripheral abutment surface 75.

The joint 70 is configured to allow a relative movement of the shaft 4 with respect to the guide spiral 6.

In the working configuration of the levelling system 1, the joint 70 is positioned in the shaft chamber 40 in a fixed position along the main axis X.

Preferably, the joint 70 is integrally connected to the guide spiral 6 in the shaft chamber 40.

Preferably, the joint 70 is connected to the shaft 4 in the shaft chamber 40.

Preferably, the joint 70 is movable together with the shaft 4 and the guide spiral 6.

In one embodiment, the joint 70 comprises an annular inner joint surface 73 radially facing inwards with respect to the main axis X, delimiting a joint seat 71.

The annular guide wall 65 of the guide spiral 6 is at least partially housed in the joint seat 71.

In one embodiment, the guide spiral 6, preferably the annular guide wall 65, is integrally connected to the joint 70, preferably to the inner joint surface 73.

The inner joint surface 73 engages the annular guide wall 65 of the guide spiral 6 in a fixed position. For example, the inner joint surface 73 is mechanically connected with interference to the annular guide wall 65.

The threaded maneuvering screw 5 passes through the joint 70 along the main axis X, for example through an axial hole of the joint 70.

The guide spiral 6 passes through the joint 70 along the main axis X, for example through an axial hole of the joint 70.

In one embodiment, the joint 70 comprises a spherical body made in one piece, having a hole passing along the main axis X, e.g., made by chip removal, in which the guide spiral 6 and the threaded maneuvering screw 5 are housed.

In one embodiment, the joint 70 comprises two hemispherical bodies 78, 79 which cooperate to form as a whole the peripheral abutment surface 75.

Each hemispherical body 78, 79 is housed in the joint seat 71 in a fixed position along the main axis X.

In one embodiment, a second hemispherical body 79 is positioned axially in abutment against an inner shoulder 44 of the inner shaft wall 45 that delimits the shaft chamber 40.

Preferably, said inner shoulder 44 of the inner shaft wall 45 has a shape locally that is substantially complementary to the peripheral abutment surface 75, for example to the second abutment half-surface 752, thereby forming a shape coupling.

In one embodiment, the peripheral abutment surface 75 is divided along the main axis X into a first abutment half-surface 751 and a second abutment half-surface 752.

Preferably, the second abutment half-surface 752 faces axially toward the free shaft end 41.

Each hemispherical body 78, 79 comprises a respective abutment half-surface 751, 752.

Preferably, a first hemispherical body 78 comprises the first abutment half-surface 751, and the second hemispherical body 79 comprises the second abutment half-surface 752.

Preferably, the second hemispherical body 79 is positioned axially between the free shaft end 41 and the first hemispherical body 78.

In one embodiment, the two hemispherical bodies 78, 79 have respective planar faces 781, 791 mutually facing each other along the main axis X, having extension on respective imaginary planes parallel to each other and incident or transverse with respect to the main axis X.

In one embodiment, the planar faces 781, 791 are positioned in mutual and planar contact.

In one embodiment, the two hemispherical bodies 78, 79 are spaced apart along the main axis X, delimiting a joint chamber 700 therebetween.

The two hemispherical bodies 78, 79 are placed in a fixed position at a predefined fixed distance D along the main axis X.

In one embodiment, the planar faces 781, 791 are mutually positioned at the fixed distance D along the main axis X.

The joint chamber 700 has an axial length equal to the fixed distance D along the main axis X.

In one embodiment, the joint 70 comprises a spacer member 77 interposed and engaged between said hemispherical bodies 78, 79 along the main axis X.

In one embodiment, the joint 70 consists of the spacer member 77 and the two hemispherical bodies 78, 79 spaced along the main axis X.

In one embodiment, the spacer member 77 comprises at least one spacer ring of calibrated thickness 77a, 77b, 77c having a predefined length along the main axis X.

In one embodiment, the spacer member 77 comprises a plurality of spacer rings of calibrated thickness 77a, 77b, 77c, each having its own length along the main axis X.

The sum of the axial lengths of the spacer rings of calibrated thickness 77a, 77b, 77c is substantially equal to the fixed distance D.

In one embodiment, the spacer member 77 comprises at least one element that is elastically deformable along the main axis X.

In a preferred embodiment, the spacer member 77 comprises a spring.

In one embodiment, the spacer member 77 comprises a rubber sleeve.

In one embodiment, the hinge assembly 7 comprises a locking member 76 mechanically fixed to the shaft 4, preferably to an axial shaft end 42 of the shaft 4.

The locking member 76 is placed to abut against a hemispherical body 78, for example the first hemispherical body 78, and is configured to maintain the predefined fixed distance D between said hemispherical bodies 78, 79.

In one embodiment, the locking member 76 comprises an abutment portion 761 that engages the peripheral abutment surface 75, preferably the first abutment half-surface 751, and an anchoring portion 762 mechanically connected to the shaft 4, preferably to the axial shaft end 42.

Preferably, the abutment portion 761 has a shape locally that is substantially complementary to the peripheral abutment surface 75, for example to the first abutment half-surface 751, creating a shape coupling.

Preferably, the anchoring portion 762 is mechanically connected to the shaft 4, preferably to the axial shaft end 42, by means of axial screws 99, preferably a plurality of axial screws 99 arranged angularly evenly spaced about the main axis X.

In one embodiment, the anchoring portion 762 is spaced apart from the shaft 4, preferably from the axial shaft end 42, identifying an axial gap.

In one embodiment, the hinge assembly 7 comprises at least one connection member 8 that mechanically connects the shaft 4 and the guide spiral 6, so as to prevent a rotation of the guide spiral 6 about the main axis X.

Preferably, the connection member 8 extends mainly in the radial direction with respect to the main axis X.

Preferably, the connection member 8 integrally connects the annular guide wall 65 and the inner shaft wall 45.

In one embodiment, the connection member 8 comprises a connection shaft portion 89 that mechanically engages the guide spiral 6, having a main extension along a member axis Z oriented radially with respect to the main axis X.

Preferably, the member axis Z is coplanar with the secondary axis Y.

Preferably, the member axis Z passes through the center of rotation R defined by the hinge assembly 7.

Preferably, the connection shaft portion 89 passes through the inner shaft wall 45 in the radial direction with respect to the main axis X and engages the annular guide wall 65, e.g., it is threaded and partially inserted into a threaded radial hole 66 extending into the annular guide wall 65 in the radial direction with respect to the main axis X.

Preferably, the connection shaft portion 89 radially passes through the joint chamber 700.

Preferably, the connection shaft portion 89 is radially spaced apart from the threaded maneuvering screw 5, allowing it to rotate.

In one embodiment, the connection member 8 comprises a connection head portion 88, for example connected to the connection shaft portion 89, having a first dimension L1 along the main axis X.

In one embodiment, the inner shaft wall 45 comprises a connection seat 80 having a second dimension L2 along the main axis X.

Preferably, the inner shaft wall 45 comprises connection faces 48, 49 that mutually extend facing and spaced apart in a circumferential direction about the main axis X, delimiting the connection seat 80 therebetween.

Preferably, the connection faces 48, 49 have a second dimension L2 along the main axis X.

The connection head portion 88 is housed in the connection seat 80.

Preferably, the connection head portion 88 is housed in the connection seat 80 with play along the main axis X.

Thus, the connection member 8 allows a relative axial movement between the connection head 88 and the inner shaft wall 45.

In other words, the connection member 8 allows the rotation of the shaft 4, in particular of the inner shaft wall 45, about the secondary axis Y or the center of rotation R.

In other words, the connection member 8 allows the shaft 4 to rotate in the plane defined by the main axis X and the member axis Z.

Preferably, the connection head portion 88 is housed in the connection seat 80 and engages the connection faces 48, 49 in a circumferential direction about the main axis X.

Thus, the connection member 8 prevents a relative rotation between the connection head portion 88 and the inner shaft wall 45 and therefore prevents a relative rotation between the shaft 4 and the guide spiral 6 about the main axis X.

Preferably, the connecting head portion 88 is a tab.

In one embodiment, the shaft 4 slidably engages the cylinder walls 32 by means of one or more guide rings 9 spaced along the axis **X.**

In one embodiment, said at least one guide ring 9 is configured to compensate, at least in part, for slight misalignments of the shaft with respect to the main axis **X.**

In one embodiment, the cylinder walls 32 extend along the main axis to a lower end 321, from which the shaft 4 protrudes at least partially.

Preferably, the screw actuator 3 comprises at least one guide ring 9 at said lower end 321.

Preferably, the screw actuator 3 comprises at least one guide ring 9 between the shaft 4 and the cylinder walls 32 placed axially at and/or near the guide spiral 6.

The subject matter of this invention is also a motor vehicle 100 comprising a vehicle chassis, for example with which the front and/or rear of the vehicle is associated, and a levelling system 1 as described above, mechanically connected to the vehicle chassis.

In one embodiment, the vehicle comprises a loading platform supported by the vehicle chassis.

In one embodiment, the vehicle chassis is mechanically connected to and supports the operating unit 10.

In one embodiment, the levelling arm is mechanically connected to the vehicle chassis of the vehicle 100.

In one embodiment, the levelling arm is mechanically connected to the operating unit 10.

In one embodiment, the levelling arm is mechanically connected to the operating unit 10 carried on the loading platform of the vehicle.

Innovatively, the levelling system according to the present invention and the motor vehicle comprising said levelling system fulfill the intended object by overcoming the typical problems of the prior art.

Advantageously, the levelling system ensures proper operation in the presence of an operating unit having an unevenly distributed mass.

Advantageously, the levelling system ensures proper operation in the presence of high loads to be moved.

Advantageously, the levelling system ensures proper operation in the presence of a steep or loose ground plane.

Advantageously, the levelling system makes it possible to compensate for the shear stresses and bending moments affecting the levelling arm.

Advantageously, the levelling system makes it possible to vary the position of the shaft with respect to the outer cylinder of the screw actuator, as needed.

Advantageously, the levelling system minimizes potentially harmful phenomena affecting the screw mechanisms of the prior art, such as high friction and wear, malfunctions, locking or breakage.

Advantageously, the levelling system ensures the axial positioning of the hinge assembly.

Advantageously, the levelling system allows thermal expansions of the shaft, without affecting the operation of the hinge assembly.

Advantageously, the levelling system has reduced dimensions.

Advantageously, the levelling system is structurally simple.

Advantageously, the levelling system simplifies the assembly operations.

Advantageously, the levelling system eliminates the constraining hyperstaticity relating to the threaded maneuvering screw, introducing a lability to the rotation of the shaft.

Advantageously, the levelling system effectively discharges the bending moment affecting the shaft, by virtue of the guide rings.

Advantageously, the hinge assembly ensures a single center of rotation, by virtue of the spacer member.

Advantageously, the force transducer detects the loading state of the levelling arm.

Advantageously, by electronically connecting the force transducer to an electronic control unit, it is possible to control the levelling arm in feedback, for example by combining such detection with other electrical signals from further sensors, such as clinometers and/or accelerometers and/or gyroscopes.

Advantageously, the levelling system contributes to ensuring high safety at work.

It is clear that a person skilled in the art may make changes to the invention described above in order to meet contingent needs, which changes all fall within the scope of protection as defined in the following claims.

## Claims

1. A levelling system (1) for levelling an operating unit (10), such as a loading platform of a motor vehicle or a cab, with respect to a ground plane (P), wherein the levelling system (1) comprises a frame (2) mechanically connectable to the operating unit (10), and at least one levelling arm (20) mechanically connected to the frame (2), wherein the levelling arm (20) comprises a screw actuator (3) comprising:
- an outer cylinder (35) integrally connected in motion to the frame (2), comprising cylinder walls (32) mainly extending along a main axis (X) and delimiting a main chamber (30);
- a shaft (4) configured to rest on the ground plane (P), at least partially housed in the main chamber (30) and slidingly engaged with the cylinder walls (32), mainly extending along a shaft axis (S) substantially parallel to the main axis (E), wherein the shaft (4) comprises an inner shaft wall (45) delimiting a shaft chamber (40) in the main chamber (30);
- a threaded maneuvering screw (5) extending along the main axis (X), at least partially housed in the shaft chamber (40) rotatably about the main axis (X);
- a guide spiral (6) at least partially housed in the shaft chamber (40), comprising an annular guide wall (65) having a guide thread (63) screwed to the threaded maneuvering screw (5);
wherein, with the shaft (4) resting on the ground plane (P), the rotation of the threaded maneuvering screw (5) corresponds to a translation along the main axis (X) of the outer cylinder (35) and the threaded maneuvering screw (5) with respect to the shaft (4) and the guide spiral (6);
wherein the levelling system (1) is **characterized in that** the screw actuator (3) comprises a hinge assembly (7) which operatively connects the shaft (4) and the guide spiral (6) so as to allow a relative oscillation between the shaft (4) and the guide spiral (6).

2. Levelling system (1) according to claim 1, wherein the guide spiral (6) is supported on the shaft (4) by the hinge assembly (7).

3. Levelling system (1) according to claim 1 or claim 2, wherein the hinge assembly (7) is configured to swing the shaft (4) with respect to the guide spiral (6) about a secondary axis (Y) incident to the shaft axis (S), preferably orthogonal to the shaft axis (S).

4. Levelling system (1) according to any one of the preceding claims, wherein the hinge assembly (7) comprises a joint (70) integrally connected to the guide spiral (6), comprising a peripheral abutment surface (75) being at least a partially spherical in shape and engaging the inner shaft wall (45) of the shaft (4), wherein the joint (70) is configured to allow the inner shaft wall (45) to slide with respect to the peripheral abutment surface (75).

5. Levelling system (1) according to claim 4, wherein the joint (70) comprises an annular inner joint surface (73) radially facing inwards with respect to the main axis (X), delimiting a joint seat (71), wherein the annular guide wall (65) of the guide spiral (6) is at least partially housed in the joint seat (71) and is integrally connected to the inner joint surface (73).

6. Levelling system (1) according to claim 4 or claim 5, wherein the peripheral abutment surface (75) is divided into a first abutment half-surface (751) and a second abutment half-surface (752), wherein the joint (70) comprises:
- two hemispherical bodies (78, 79) placed at a predefined fixed distance (D) along the main axis (X), each comprising an abutment half-surface (751, 752); and
- at least one spacer member (77) interposed and engaged between said joint elements (78, 79) along the main axis (X).

7. Levelling system (1) according to claim 6, wherein the spacer member (77) comprises at least one spacer ring (77a, 77b, 77c) of calibrated thickness having a predefined length along the main axis (X).

8. Levelling system (1) according to claim 6, wherein the spacer member (77) comprises at least one element elastically deformable along the main axis (X), preferably a spring or a rubber sleeve.

9. Levelling system (1) according to any one of claims 6 to 8, wherein the hinge assembly (7) comprises a locking member (76) mechanically fixed to an axial shaft end (42) of the shaft (4) and placed to abut against a hemispherical body (78), configured to maintain the predefined fixed distance (D) between said hemispherical bodies (78, 79).

10. Levelling system (1) according to any one of the preceding claims, wherein the hinge assembly (7) comprises a connection member (8) mechanically connecting the shaft (4) and the guide spiral (6) to prevent a rotation of the guide spiral (6) about the main axis (X).

11. Levelling system (1) according to claim 10, wherein the inner shaft wall (45) comprises a connection seat (80), wherein the connection member (8) comprises a connection head portion (88) housed in the connection seat (80) and having a first dimension (L1) along the main axis (X), wherein the connection seat (80) has a second dimension (L2) along the main axis (X) greater than the first dimension (L1) of the head portion (88).

12. Levelling system (1) according to claim 11 in combination with any one of claims 3 to 10, wherein the connection member (8) comprises a connection shaft portion (89) which mechanically engages the guide spiral (6), having a main extension along a member axis (Z) oriented radially with respect to the main axis (X) and coplanar to the secondary axis (Y).

13. A motor vehicle (100) comprising a vehicle chassis and a levelling system (1) according to any one of claims 1 to 12, mechanically connected to said vehicle chassis.

## Patentansprüche

1. Nivellierungssystem (1) zum Nivellieren einer Betriebseinheit (10), wie beispielsweise einer Ladeplattform eines Kraftfahrzeugs oder einer Kabine, in Bezug auf eine Bodenebene (P), wobei das Nivellierungssystem (1) einen Rahmen (2) umfasst, der mechanisch mit der Betriebseinheit (10) verbunden werden kann, und mindestens einen Nivellierungsarm (20), der mechanisch mit dem Rahmen (2) verbunden ist, wobei der Nivellierungsarm (20) einen Schraubenaktuator (3) umfasst, umfassend:
- einen Außenzylinder (35), der in Bewegung ganz mit dem Rahmen (2) verbunden ist, umfassend Zylinderwände (32), die sich hauptsächlich entlang einer Hauptachse (X) erstrecken und eine Hauptkammer (30) begrenzen;
- eine Welle (4), die dazu konfiguriert ist, auf der Bodenebene (P) aufzuliegen, die mindestens teilweise in der Hauptkammer (30) aufgenommen wird und gleitend mit den Zylinderwänden (32) in Eingriff steht, wobei sie sich hauptsächlich entlang einer Wellenachse (S) erstreckt, die sich im Wesentlichen parallel zu der Hauptachse (E) erstreckt, wobei die Welle (4) eine innere Wellenwand (45) umfasst, die eine Wellenkammer (40) in der Hauptkammer (30) begrenzt;
- eine Gewindebetätigungsschraube (5), die sich entlang der Hauptachse (X) erstreckt, mindestens teilweise in der Wellenkammer (40) drehbar um die Hauptachse (X) aufgenommen wird;
- ein spiralförmiges Führungselement (6), das mindestens teilweise in der Wellenkammer (40) aufgenommen wird, umfassend eine ringförmige Führungswand (65), die ein Führungsgewinde (63) aufweist, das mit der Gewindebetätigungsschraube (5) verschraubt wird;
wobei, wenn die Welle (4) auf der Bodenebene (P) aufliegt, die Drehung der Gewindebetätigungsschraube (5) einer Verschiebung entlang der Hauptachse (X) des Außenzylinders (35) und der Gewindebetätigungsschraube (5) in Bezug auf die Welle (4) und das spiralförmige Führungselement (6) entspricht;
wobei das Nivellierungssystem (1) **dadurch gekennzeichnet ist, dass** der Schraubenaktuator (3) eine Scharnieranordnung (7) umfasst, die die Welle (4) und das spiralförmige Führungselement (6) operativ miteinander verbindet, um eine relative Schwankung zwischen der Welle (4) und dem spiralförmigen Führungselement (6) zu ermöglichen.

2. Nivellierungssystem (1) nach Anspruch 1, wobei das spiralförmige Führungselement (6) von der Scharnieranordnung (7) an der Welle (4) gestützt wird.

3. Nivellierungssystem (1) nach Anspruch 1 oder 2, wobei die Scharnieranordnung (7) dazu konfiguriert ist, die Welle (4) in Bezug auf das spiralförmige Führungselement (6) um eine Nebenachse (Y) zu schwingen, die die Wellenachse (S) schneidet, vorzugsweise orthogonal zu der Wellenachse (S) ist.

4. Nivellierungssystem (1) nach einem der vorhergehenden Ansprüche, wobei die Scharnieranordnung (7) ein Gelenk (70) umfasst, das ganz mit dem spiralförmigen Führungselement (6) verbunden ist, umfassend eine periphere Anlagefläche (75), die mindestens teilweise kugelförmig ausgebildet ist und die mit der inneren Wellenwand (45) der Welle (4) in Eingriff steht, wobei das Gelenk (70) dazu konfiguriert ist, der inneren Wellenwand (45) zu erlauben, in Bezug auf die periphere Anlagefläche (75) zu gleiten.

5. Nivellierungssystem (1) nach Anspruch 4, wobei das Gelenk (70) eine ringförmige innere Gelenkfläche (73) umfasst, die radial nach innen in Bezug auf die Hauptachse (X) gerichtet ist, die einen Gelenksitz (71) begrenzt, wobei die ringförmige Führungswand (65) des spiralförmigen Führungselements (6) mindestens teilweise in dem Gelenksitz (71) aufgenommen wird und ganz mit der inneren Gelenkfläche (73) verbunden ist.

6. Nivellierungssystem (1) nach Anspruch 4 oder 5, wobei die periphere Anlagefläche (75) in eine erste Anlagehalbfläche (751) und eine zweite Anlagehalbfläche (752) unterteilt ist, wobei das Gelenk (70) umfasst:
zwei halbkugelförmige Körper (78, 79), die in einem vorgegebenen festen Abstand (D) entlang der Hauptachse (X) angeordnet sind und jeweils eine Anlagehalbfläche (751, 752) aufweisen; und
- mindestens ein Abstandshalter (77), der zwischen den Gelenkelementen (78, 79) entlang der Hauptachse (X) angeordnet ist und in Eingriff steht.

7. Nivellierungssystem (1) nach Anspruch 6, wobei der Abstandshalter (77) mindestens einen Abstandsring (77a, 77b, 77c) mit kalibrierter Dicke aufweisend eine vorgegebene Länge entlang der Hauptachse (X) umfasst.

8. Nivellierungssystem (1) nach Anspruch 6, wobei der Abstandshalter mindestens ein Element umfasst, das entlang der Hauptachse (X) elastisch verformbar ist, vorzugsweise eine Feder oder eine Gummihülse.

9. Nivellierungssystem (1) nach einem der Ansprüche 6 bis 8, wobei die Scharnieranordnung (7) ein Verriegelungselement (76) umfasst, das mechanisch an einem axialen Wellenende (42) der Welle (4) befestigt wird und so angeordnet ist, dass es an einem halbkugelförmigen Körper (78) anliegt, das dazu konfiguriert ist, den vorgegebenen Festabstand (D) zwischen den halbkugelförmigen Körpern (78, 79) zu halten.

10. Nivellierungssystem (1) nach einem der vorhergehenden Ansprüche, wobei die Scharnieranordnung (7) ein Verbindungselement (8) umfasst, das die Welle (4) und das spiralförmige Führungselement (6) mechanisch miteinander verbindet, um eine Drehung des spiralförmigen Führungselement (6) um die Hauptachse (X) zu verhindern.

11. Nivellierungssystem (1) nach Anspruch 10, wobei die innere Wellenwand (45) einen Verbindungssitz (80) umfasst, wobei das Verbindungselement (8) einen Verbindungskopfabschnitt (88) umfasst, der in dem Verbindungssitz (80) aufgenommen wird und aufweisend eine erste Abmessung (L1) entlang der Hauptachse (X), wobei der Verbindungssitz (80) eine zweite Abmessung (L2) entlang der Hauptachse (X) aufweist, die größer als die erste Abmessung (L1) des Kopfabschnitts (88) ist.

12. Nivellierungssystem (1) nach Anspruch 11 in Kombination mit einem der Ansprüche 3 bis 10, wobei das Verbindungselement (8) einen Verbindungswellenabschnitt (89) umfasst, der mechanisch mit dem spiralförmigen Führungselement (6) in Eingriff steht, aufweisend eine Haupterstreckung entlang einer Elementachse (Z), die radial in Bezug auf die Hauptachse (X) ausgerichtet ist und komplanar zu der Nebenachse (Y) ist.

13. Kraftfahrzeug (100) umfassend ein Fahrzeugchassis und ein Nivellierungssystem (1) nach einem der Ansprüche 1 bis 12 umfasst, das mechanisch mit dem Fahrzeugchassis verbunden ist.

## Revendications

1. Système de mise à niveau (1) pour la mise à niveau d'une unité opérationnelle (10), telle qu'une plate-forme de chargement d'un véhicule à moteur ou une cabine, par rapport à un plan de sol (P), ledit système de mise à niveau (1) comprenant un cadre (2) mécaniquement connectable à l'unité opérationnelle (10), et au moins un bras de mise à niveau (20) mécaniquement relié au cadre (2), ledit bras de mise à niveau (20) comprenant un actionneur à vis (3) comprenant :
- un cylindre externe (35) solidaire en mouvement du cadre (2), comprenant des parois de cylindre (32) s'étendant principalement le long d'un axe principal (X) et délimitant une chambre principale (30) ;
- un arbre (4) configuré pour reposer sur le plan de sol (P), logé au moins partiellement dans la chambre principale (30) et monté coulissant avec les parois du cylindre (32), s'étendant principalement le long d'un axe d'arbre (S) sensiblement parallèle à l'axe principal (E), l'arbre (4) comprenant une paroi interne d'arbre (45) délimitant une chambre d'arbre (40) dans la chambre principale (30) ;
- une vis de manœuvre filetée (5) s'étendant le long de l'axe principal (X), logée au moins partiellement dans la chambre d'arbre (40) en rotation autour de l'axe principal (X) ;
une spirale de guidage (6) logée au moins partiellement dans la chambre d'arbre (40), comprenant une paroi annulaire de guidage (65) présentant un filet de guidage (63) vissé sur la vis de manœuvre filetée (5) ;
dans lequel, lorsque l'arbre (4) repose sur le plan de sol (P), la rotation de la vis de manœuvre filetée (5) correspond à une translation le long de l'axe principal (X) du cylindre externe (35) et de la vis de manœuvre filetée (5) par rapport à l'arbre (4) et à la spirale de guidage (6) ;
dans lequel le système de mise à niveau (1) est **caractérisé en ce que** l'actionneur à vis (3) comprend un ensemble de charnière (7) qui relie fonctionnellement l'arbre (4) et la spirale de guidage (6) de manière à permettre une oscillation relative entre l'arbre (4) et la spirale de guidage (6).

2. Système de mise à niveau (1) selon la revendication 1, dans lequel la spirale de guidage (6) est supportée sur l'arbre (4) par l'ensemble de charnière (7).

3. Système de mise à niveau (1) selon la revendication 1 ou la revendication 2, dans lequel l'ensemble de charnière (7) est configuré pour faire pivoter l'arbre (4) par rapport à la spirale de guidage (6) autour d'un axe secondaire (Y) incident à l'axe d'arbre (S), de préférence orthogonal à l'axe d'arbre (S).

4. Système de mise à niveau (1) selon l'une quelconque des revendications précédentes, dans lequel l'ensemble de charnière (7) comprend un joint (70) solidaire de la spirale de guidage (6), comprenant une surface périphérique d'appui (75) au moins partiellement sphérique en forme et venant en contact avec la paroi interne d'arbre (45) de l'arbre (4), le joint (70) étant configuré pour permettre à la paroi interne d'arbre (45) de coulisser par rapport à la surface périphérique d'appui (75).

5. Système de mise à niveau (1) selon la revendication 4, dans lequel le joint (70) comprend une surface annulaire interne de joint (73) faisant face radialement vers l'intérieur par rapport à l'axe principal (X), délimitant un logement de joint (71), dans lequel la paroi annulaire de guidage (65) de la spirale de guidage (6) est logée au moins partiellement dans le logement de joint (71) et est solidaire de la surface annulaire interne de joint (73).

6. Système de mise à niveau (1) selon la revendication 4 ou la revendication 5, dans lequel la surface périphérique d'appui (75) est divisée en une première demi-surface d'appui (751) et une seconde demi-surface d'appui (752), le joint (70) comprenant :
deux corps hémisphériques (78, 79) placés à une distance fixe prédéfinie (D) le long de l'axe principal (X), chacun comprenant une demi-surface d'appui (751, 752) ; et
- au moins un élément d'entretoise (77) interposé et engagé entre lesdits éléments de joint (78, 79) le long de l'axe principal (X).

7. Système de mise à niveau (1) selon la revendication 6, dans lequel l'élément d'entretoise (77) comprend au moins une bague d'entretoise (77a, 77b, 77c) d'épaisseur calibrée ayant une longueur prédéfinie le long de l'axe principal (X).

8. Système de mise à niveau (1) selon la revendication 6, dans lequel l'élément d'entretoise comprend au moins un élément élastiquement déformable le long de l'axe principal (X), de préférence un ressort ou une gaine en caoutchouc.

9. Système de mise à niveau (1) selon l'une quelconque des revendications 6 à 8, dans lequel l'ensemble de charnière (7) comprend un élément de verrouillage (76) fixé mécaniquement à une extrémité axiale d'arbre (42) de l'arbre (4) et placé en butée contre un corps hémisphérique (78), configuré pour maintenir la distance fixe prédéfinie (D) entre lesdits corps hémisphériques (78, 79).

10. Système de mise à niveau (1) selon l'une quelconque des revendications précédentes, dans lequel l'ensemble de charnière (7) comprend un élément de liaison (8) reliant mécaniquement l'arbre (4) et la spirale de guidage (6) afin d'empêcher une rotation de la spirale de guidage (6) autour de l'axe principal (X).

11. Système de mise à niveau (1) selon la revendication 10, dans lequel la paroi interne d'arbre (45) comprend un logement de liaison (80), l'élément de liaison (8) comprenant une portion de tête de liaison (88) logée dans le logement de liaison (80) et présentant une première dimension (L1) le long de l'axe principal (X), le logement de liaison (80) ayant une seconde dimension (L2) le long de l'axe principal (X) supérieure à la première dimension (L1) de la portion de tête (88).

12. Système de mise à niveau (1) selon la revendication 11 en combinaison avec l'une quelconque des revendications 3 à 10, dans lequel l'élément de liaison (8) comprend une portion d'arbre de liaison (89) qui s'engage mécaniquement avec la spirale de guidage (6), présentant une extension principale le long d'un axe de l'élément (Z) orienté radialement par rapport à l'axe principal (X) et coplanaire à l'axe secondaire (Y).

13. Véhicule à moteur (100) comprenant un châssis de véhicule et un système de mise à niveau (1) selon l'une quelconque des revendications 1 à 12, mécaniquement relié audit châssis de véhicule.
